# EUROPEAN PATENT SPECIFICATION

(11) **EP 1 449 819 B1**
(45) Date of publication and mention of the grant of the patent: **03.07.2013**
(21) Application number: 02755813.9
(22) Date of filing: 05.08.2002
(51) Int. Cl.: C04B 41/85, C04B 41/88, C04B 38/00, C04B 35/565

(54) **SILICON CARBIDE-BASED HEAT-RESISTANT, ULTRA-LIGHTWEIGHT, POROUS STRUCTURAL MATERIAL AND PROCESS FOR PRODUCING THE SAME**
AUF SILICIUMCARBID BASIERENDER WÄRMEBESTÄNDIGER ULTRALEICHTER PORÖSER KONSTRUKTIONSWERKSTOFF UND VERFAHREN ZU SEINER HERSTELLUNG
MATERIAU STRUCTURAL POREUX SUPER-LEGER ET RESISTANT A LA CHALEUR A BASE DE CARBURE DE SILICIUM

(30) Priority: 07.08.2001 JP 2001238547; 20.08.2001 JP 2001248484
(43) Date of publication of application: 25.08.2004
(73) Proprietor: National Institute of Advanced Industrial Science and Technology, Tokyo 100-0013 (JP)
(72) Inventor: TANI, Eiji, Tosu-shi, Saga 841-0052 (JP)
(74) Representative: Findlay, Alice Rosemary
(86) International application number: PCT/JP2002/007950
(87) International publication number: WO 2003/014042

(56) References cited:
- EP-A- 0 337 285
- WO-A1-99/04900
- DE-A1- 19 621 638
- FR-A- 2 766 389
- FR-A- 2 790 470
- FR-A1- 2 705 340
- JP-A- 2 111 663
- JP-A- 2000 109 376
- JP-A- 2000 313 676
- JP-A- 2001 226 174
- JP-A- 2001 226 174
- US-A- 4 332 753
- US-A- 4 477 493
- US-A- 5 324 692

## Description

### Technical Field

The present invention relates to silicon carbide-based heat-resistant, ultra-lightweight, porous structural materials having a sponge structure with interconnected pores, the materials being produced by a two-step reactive sintering process including a step of sintering silicon and carbon and a step of infiltrating molten silicon into the sintered body, and also relates to processes for producing the materials. The present invention particularly relates to a heat-resistant, ultra-lightweight, porous structural material fit for various applications such as high-temperature filters, high-temperature structural members, heat insulators, filters for molten metal, burner plates, heater members, and high-temperature sound absorbers and also relates to a process for producing the material.

### Background Art

Silicon carbide ceramics are light in weight and excellent in heat resistance, abrasion resistance, corrosion resistance, and so on. Therefore, such ceramics have been recently used in various applications such as high-temperature corrosion-resistant members, heater members, abrasion-resistant members, abrasives, and grindstones. Since the ceramics are principally produced by a sintering process, they have not been in practical use as ultra-lightweight porous members having a porosity of 90% or more and a filter shape.

In recent years, the porous ceramics having heat resistance and ultra lightweight have been investigated. For example, Bridgestone Corporation has succeeded in producing a porous silicon carbide structure used for ceramic foam filters for cast iron according to the following procedure: a sponge is impregnated with silicon carbide slurry, and an excess of the slurry is removed from the resulting sponge, which is dried and then fired, oce JP 2001 109376 A. According to a catalogue showing properties, the porous silicon carbide structure has a porosity of 85% and an apparent specific gravity of 0.42.

In the above procedure, since the slurry containing silicon carbide powder is used, some pores are plugged with the remaining slurry although an excess of the slurry is removed from the sponge. Therefore, the porosity is 85%, which is a small value, and the apparent specific gravity is 0.42, which is a large value. Furthermore, the pore size is about 1-5 mm (the standard number of cells ranges from 13 per 25 mm to six per mm), which is a large value.

On the other hand, the inventors have obtained the following finding in the investigation of a fiber-reinforced silicon carbide composite material: molten silicon hardly reacts with a dense matrix, prepared by the carbonization of a phenol resin, containing only amorphous carbon but readily permeate a porous matrix and reacts therewith, wherein the porous matrix contains residual amorphous carbon and silicon carbide that is produced by the reactive sintering (volume reduction reaction) of a mixture of silicon powder and a phenol resin and has high wettability to the molten silicon, as disclosed in Japanese Patent No. 3096716. Furthermore, the inventors have found that this technique can be used for producing an ultra-lightweight, porous structural material.

### Disclosure of Invention

The present invension is defined by the claims. The present invention provides a silicon carbide-based heat-resistant, ultra lightweight, porous structural material and a process for producing the material, wherein the material has uniform pores therein, a porosity of 80% or more, and a density of 0.3 g/cm³ or less. The material can be readily produced in such a manner that the shape of the framework of a porous body is maintained even if the shape is complicated.

As a result of an intensive investigation on the silicon carbide-based heat-resistant, ultra-lightweight, porous structural material, the inventors have found that the material can be readily produced in such a manner that the shape of the framework of the porous body is maintained even if the shape is complicated according to the following procedure: silicon powder and a resin are allowed to adhere to the framework of the porous body such as a sponge by an impregnation method, porous silicon carbide and residual carbon are produced from the silicon powder and resin by the silicon carbide production reaction in which volume reduction occurs, and molten silicon is then infiltrated into the pores. The present invention has thereby been completed.

The silicon carbide-based heat-resistant, ultra-lightweight, porous structural material of the present invention completed as described above contains silicon carbide having high wettability to molten silicon and silicon provided in a carbonized porous sintered body, having open pores formed due to a volume reduction reaction, by melt infiltration. The carbonized porous sintered body is formed by the reactive sintering of a carbonized porous body formed by carbonizing a spongy porous body made of plastic or paper for forming a framework, the porous body being impregnated with slurry containing silicon powder and a resin functioning as a carbon source in such a manner that interconnected pores of the porous body are not plugged with the slurry.

A process for producing the silicon carbide-based heat-resistant, ultra-lightweight, porous structural material of the present invention includes a step of applying slurry, containing silicon powder and a resin functioning as a carbon source, to the framework of a spongy porous body made of plastic or paper by an impregnation method in such a manner that interconnected pores of the porous body are not plugged with the slurry; a step of carbonizing the resulting porous body at a temperature of 900°C to 1320°C in vacuum or in an inert atmosphere; a step of subjecting the resulting porous body to reactive sintering at a temperature of 1320°C or more in vacuum or in an inert atmosphere, whereby silicon carbide having high wettability to molten silicon is produced and open pores due to a volume reduction reaction are formed in one step; and a step of infiltrating molten silicon into the resulting porous body at a temperature of 1300°C to 1800°C in vacuum or in an inert atmosphere.

In the above process, the reactive sintering of silicon and carbon and the melt infiltration of silicon may be performed in the same heat-treating step and all heat-treating operations including the carbonization may be performed in the same step.

According to the process of the present invention, large-sized structures with a complicated shape can be readily produced and porous bodies can be readily machined after the carbonization thereof.

In the above process, in order to impregnate the porous body with the slurry in such a manner that the interconnected pores are not plugged with the slurry, the following procedure is effective: the slurry containing the resin and silicon powder is applied to the framework of the porous body by an impregnation method and the slurry is then wrung out of the resulting porous body. Examples of a method for wring the slurry include a compression method and a method using the centrifugal force.

In the above process, a material for forming the framework of the spongy porous body preferably retains the slurry and examples of such a material include a sponge containing a resin or rubber, spongy plastic, and spongy paper.

In the above process, examples of the resin allowed to adhere to the framework of the porous body by an impregnation method include a phenol resin, a furan resin, an organic metal polymer such as polycarbosilane, and sucrose. These materials may be used alone or in combination. Examples of the additive include carbon powder, graphite powder, and carbon black. Examples of the aggregate or oxidation inhibitor include silicon carbide, silicon nitride, zirconia, zirconium, alumina, silica, mullite, molybdenum silicide, boron carbide, and boron powder.

In the above process, the silicon powder contained in the slurry may contain a silicon alloy containing at least one selected from the group consisting of magnesium, aluminum, titanium, chromium, manganese, iron, cobalt, nickel, copper, zinc, zirconium, niobium, molybdenum, and tungsten or the slurry may contain a mixture of the silicon powder and those metals. Furthermore, silicon for melt infiltration may be a pure silicon metal or may be derived from a silicon alloy containing one selected from the group consisting of magnesium, aluminum, titanium, chromium, manganese, iron, cobalt, nickel, copper, zinc, zirconium, niobium, molybdenum, and tungsten or derived from a mixture of silicon and those metals.

According to the silicon carbide-based heat-resistant, ultra-lightweight, porous structural material and production process of the present invention, the slurry containing the silicon powder and the resin functioning as a carbon source is applied to the framework of the spongy porous body by an impregnation method in such a manner that the interconnected pores of the porous body are not plugged with the slurry, silicon carbide having high wettability to molten silicon and the open pores are formed by the reactive sintering, and molten silicon is then infiltrated into the pores. Therefore, a silicon carbide-based heat-resistant, lightweight, porous composite material having the same shape as that of the porous structural material can be readily produced. Thus, the porous composite material can be readily produced even if it has a complicated shape.

### Best Mode for Carrying Out the Invention

Preferred embodiments of the present invention will now be described.

In a process of the present invention, slurry is prepared by mixing silicon powder with a dissolved resin, such as a phenol resin, functioning as a carbon source; the slurry is sufficiently applied onto the framework of a spongy, porous structural material or the porous structural material is immersed in the slurry such that the porous structural material is impregnated with the slurry; the slurry is wrung out of the resulting porous structural material in such a manner that interconnected pores of the porous structural material are not plugged with the slurry; and the resulting porous structural material is then dried. The porous structural material is preferably dried at about 70°C for about 12 hours.

Examples of the porous structural material include sponges containing a resin or rubber, spongy plastics, and spongy paper.

The resin allowed to adhere to the framework of the porous structural material is at least one selected from the group consisting of a phenol resin, a furan resin, an organic metal polymer, and sucrose. The resin may contain the above additive and the like according to needs.

The silicon powder for forming silicon carbide preferably has a fine particle size. In particular, the average particle size is preferably 30 µm or less. The silicon powder having a large particle size may be pulverized in a ball mill.

Next, the resulting porous structural material is carbonized at a temperature of 900-1320°C in vacuum or in an inert atmosphere such as an argon atmosphere. In this operation, the spongy porous structural material is thermally decomposed, whereby a carbonized composite material is obtained. The framework of the carbonized composite material contains carbon produced by the carbonization of the phenol resin and the silicon powder, the carbon and silicon powder being mixed together. The shape of the carbonized composite material is the same as that of the porous structural material. The carbonized porous structural material has a strength sufficient for machining.

The carbonized porous structural material is fired at a temperature of 1320°C or more in vacuum or in an inert atmosphere such as an argon atmosphere such that carbon reacts with silicon, whereby porous silicon carbide having high wettability to molten silicon is formed on the framework of the material. Since the volume is reduced in this reaction, open pores are formed due to the volume reduction reaction. This results in a porous sintered body having a matrix portion containing porous silicon carbide and residual carbon.

The porous sintered body is heated to a temperature of 1300-1800°C in vacuum or in an inert atmosphere, and molten silicon is infiltrated into porous portions of the framework containing silicon carbide and carbon, whereby a silicon carbide-based heat-resistant, ultra-lightweight, porous structural material is obtained.

According to the present invention, in the mixture of the silicon powder and carbon derived from the resin, the molar ratio of silicon to carbon is preferably within a range of 0.05 to 4.

### EXAMPLES

A process of the present invention will now be described in detail with reference to examples. The present invention is not limited to the examples.

### [EXAMPLE 1]

The mixing ratio of a phenol resin to silicon powder was set such that the molar ratio of carbon formed by the carbonization of the phenol resin to silicon is five to three. The phenol resin was dissolved in ethyl alcohol, thereby preparing slurry. In order to reduce the size of the silicon particles, the slurry was mixed in a ball mill for one day. The slurry was infiltrated into a polyurethane sponge having pores with a size of 500-600 µm. The resulting sponge was wrung in such a manner that the interconnected pores are not plugged with the slurry. The resulting sponge was then dried. In this operation, the sponge was expanded in the axial direction by about 20%.

The resulting sponge was fired at 1000°C for one hour in an argon atmosphere, thereby carbonizing the sponge. The obtained carbonaceous porous body was heated at 1450°C for one hour in vacuum, thereby performing reactive sintering and the melt infiltration of silicon in one step. A silicon carbide-based heat-resistant, ultra-lightweight, porous structural material having the same shape as that of the sponge was then obtained. In the carbonizing operation, the sponge was slightly reduced in size because the carbonized sponge shrunk in the axial direction by about 12% as compared with the untreated sponge.

The obtained porous structural material had the same structure as that of the sponge and also had a pore diameter of 500-600 µm, a porosity of 97%, and a density of 0.07 g/cm³. The porous structural material did not have plugged pores.

### [EXAMPLE 2]

The mixing ratio of a phenol resin to silicon powder was set such that the molar ratio of carbon formed by the carbonization of the phenol resin to silicon is five to three. The phenol resin was dissolved in ethyl alcohol, thereby preparing slurry. In order to reduce the size of the silicon particles, the slurry was mixed in a ball mill for one day. The slurry was infiltrated into a polyurethane sponge having pores with a size of about one mm. The resulting sponge was wrung in such a manner that the interconnected pores are not plugged with the slurry. The resulting sponge was then dried. In this operation, the sponge was expanded in the axial direction by about 20%.

The resulting sponge was fired at 1000°C for one hour in an argon atmosphere, thereby carbonizing the sponge. The obtained carbonaceous porous body was heated at 1450°C for one hour in vacuum, thereby performing reactive sintering and the melt infiltration of silicon in one step. A silicon carbide-based heat-resistant, ultra-lightweight, porous structural material having the same shape as that of the sponge was then obtained. In the carbonizing operation, the sponge was slightly reduced in size because the carbonized sponge shrunk in the axial direction by about 12% as compared with the untreated sponge.

The obtained porous structural material had the same structure as that of the sponge and also had a pore diameter of about one mm, a porosity of 97%, and a density of 0.06 g/cm³.

### [EXAMPLE 3]

The mixing ratio of a phenol resin to silicon powder was set such that the molar ratio of carbon formed by the carbonization of the phenol resin to silicon is five to three. The phenol resin was dissolved in ethyl alcohol, thereby preparing slurry. In order to reduce the size of the silicon particles, the slurry was mixed in a ball mill for one day. The slurry was infiltrated into a polyurethane sponge having pores with a size of about 1.5-2 mm. The resulting sponge was wrung in such a manner that the interconnected pores are not plugged with the slurry. The resulting sponge was then dried. In this operation, the sponge was hardly expanded.

The resulting sponge was fired at 1000°C for one hour in an argon atmosphere, thereby carbonizing the sponge. The obtained carbonaceous porous body was heated at 1450°C for one hour in vacuum, thereby performing reactive sintering and the melt infiltration of silicon in one step. A silicon carbide-based heat-resistant, ultra-lightweight, porous structural material having the same shape as that of the sponge was then obtained. In the carbonizing operation, the sponge was slightly reduced in size because the carbonized sponge shrunk in the axial direction by about 12%.

The obtained porous structural material had the same structure as that of the sponge and also had a pore diameter of about 1.5-2 mm, a porosity of 95%, and a density of 0.1 g/cm³.

### [COMPARATIVE EXAMPLE 1]

The same sponge as that used in Example 1 was fired at 1000°C for one hour in an argon atmosphere. As a result, the sponge was vanished.

### [COMPARATIVE EXAMPLE 2]

A phenol resin was dissolved in ethyl alcohol, thereby preparing slurry. The slurry was infiltrated into a polyurethane sponge having a pore diameter of 500-600 µm. The resulting sponge was wrung in such a manner that the interconnected pores are not plugged with the slurry. The resulting sponge was then dried.

The resulting sponge was fired at 1000°C for one hour in an argon atmosphere, thereby carbonizing the sponge. The obtained carbonaceous porous body was heated at 1450°C for one hour in vacuum, thereby performing reactive sintering and the melt infiltration of silicon in one step. However, the infiltration of silicon did not occur. Therefore, the carbonaceous porous body remained as it was.

### Industrial Applicability

As described above in detail, according to a silicon carbide-based heat-resistant, ultra-lightweight, porous structural material of the present invention, a silicon carbide-based.heat-resistant, lightweight, porous composite material having the same shape as that of the porous structural material can be produced. Therefore, the porous composite material can be readily produced even if it has a complicated shape. Thus, the porous structural material can be used in various applications such as high-temperature filters, high-temperature structural members, heat insulators, filters for molten metal, burner plates, heater members, and high-temperature sound absorbers.

## Claims

1. A silicon carbide-based heat-resistant, ultra-lightweight, porous structural material, the material having a porosity of greater than 90% and a density of less than 0.3 g/cm³, the material containing silicon carbide having high wettability to molten silicon, the material further containing silicon provided by melt infiltration in a carbonized porous sintered body having open pores formed by a volume reduction reaction, wherein the carbonized porous sintered body is formed by the reactive sintering of a spongy carbonized porous body formed by carbonizing a porous body made of plastic or paper for forming a framework, the porous body being impregnated with slurry containing silicon powder and a resin functioning as a carbon source, the molar ratio of silicon to carbon being 0.05 to 4 and the silicon powder having an average particle size of 30µm or less through ball milling, the porous body being wrung after applying the slurry so that interconnected pores of the porous body are not plugged with the slurry, and wherein the material has the same shape as the spongy carbonized porous body.

2. The silicon carbide-based heat-resistant, ultra-lightweight, porous structural material according to claim 1, wherein the resin is at least one selected from the group consisting of a phenol resin, a furan resin, an organic metal polymer, and sucrose.

3. The silicon carbide-based heat-resistant, ultra-lightweight, porous structural material according to claim 1, wherein the slurry contains an addictive selected from the group consisting of carbon powder, graphite powder, and carbon black.

4. The silicon carbide-based heat-resistant, ultra-lightweight, porous structural material according to claim 1, wherein the slurry contains an aggregate or oxidation inhibitor that is at least one selected from the group consisting of silicon carbide, silicon nitride, zirconia, zirconium, alumina, silica, mullite, molybdenum silicide, boron carbide, and boron powder.

5. The silicon carbide-based heat-resistant, ultra-lightweight, porous structural material according to claim 1, wherein the silicon powder contained in the slurry comprises a silicon alloy containing at least one selected from the group consisting of magnesium, aluminium, titanium, chromium, manganese, iron, cobalt, nickel, copper, zinc, zirconium, niobium, molybdenum, and tungsten or the slurry comprises a mixture of the silicon powder and the metal(s).

6. The silicon carbide-based heat-resistant, ultra-lightweight, porous structural material according to claim 1, wherein the silicon for melt Infiltration is derived from a silicon alloy containing at least one selected from the group consisting of magnesium, aluminium, titanium, chromium, manganese, iron, cobalt, nickel, copper, zinc, zirconium, niobium, molybdenum, and tungsten or is derived from a mixture of silicon and the metal(s).

7. A process for producing a silicon carbide-based heat-resistant, ultra-lightweight, porous structural material, the material having a porosity of greater than 90% and a density of less than 0.3 g/cm³, the material containing silicon carbide having high wettability to molten silicon, the material further containing silicon, the method comprising applyinga slurry containing silicon powder and a resin functioning as a carbon source, to the framework of a spongy porous body, made of plastic or paper by an impregnation method, the molar ratio of silicon to carbon being 0.05 to 4 and the silicon powder having an average particle size of 30µm or less through ball milling, wringing the porous body after applying the slurry so that the interconnected pores of the porous body are not plugged with the slurry, carbonizing the resulting porous body at a temperature of 900°C to 1320°C in vacuum or in an inert atmosphere, subjecting the resulting porous body to reactive sintering at a temperature of 1320°C or more in vacuum or in an inert atmosphere, whereby silicon carbide having high wettability to molten silicon is produced and open pores due to a volume reduction reaction are formed in one step, and infiltrating molten silicon into the resulting porous body at a temperature of 1300°C to 1800°C in vacuum or in an inert atmosphere, wherein the material has the same shape as the spongy carbonized porous body.

8. The process for producing a silicon carbide-based heat-resistant, ultra-lightweight, porous structural material according to claim 7, wherein the resin is at least one selected from the group consisting of a phenol resin, a furan resin, an organic metal polymer, and sucrose.

9. The process for producing a silicon carbide-based heat-resistant, ultra-lightweight, porous structural material according to claim 7 wherein the slurry contains an additive selected from the group consisting of carbon powder, graphite powder, and carbon black.

10. The process for producing a silicon carbide-based heat-resistant, ultra-lightweight, porous structural material according to claim 7, wherein the slurry contains an aggregate or oxidation inhibitor that is at least one selected from the group consisting of silicon carbide, silicon nitride, zirconia, zirconium, alumina, silica, mullite, molybdenum silicide, boron carbide, and boron powder.

11. The process for producing a silicon carbide-based heat-resistant, ultra-lightweight, porous structural material according to claim 7, wherein the silicon powder comprises a silicon alloy containing at least one selected from the group consisting of magnesium, aluminium, titanium, chromium, manganese, iron, cobalt, nickel, copper, zinc, zirconium, nioblum, molybdenum, and tungsten or the slurry comprises a mixture of the silicon powder and the metal(s).

12. The process for producing a silicon carbide-based heat-resistant, ultra-lightweight, porous structural material according to claim 7, wherein the silicon for melt infiltration is derived from a silicon alloy containing at least one selected from the group consisting of magnesium, aluminium, titanium, chromium, manganese, iron, cobalt, nickel, copper, zinc, zirconium, niobium, molybdenum, and tungsten or is derived from a mixture of silicon and the metal(s),

## Patentansprüche

1. Wärmebeständiges, ultraleichtes poröses Strukturmaterial auf der Basis von Siliciumcarbid, wobei das Material eine Porosität von mehr als 90 % und eine Dichte von weniger als 0,3 g/cm³ hat, wobei das Material Siliciumcarbid mit einer hohen Benetzbarkeit für geschmolzenes Silicium hat, wobei das Material ferner Silicium enthält, das durch Schmelzinfiltration in einem karbonisierten porösen Sinterkörper mit durch eine Volumenreduzierungsreaktion erzeugten offenen Poren gebildet wird, wobei der karbonisierte poröse Sinterkörper durch die reaktive Sinterung eines schwammigen karbonisierten porösen Körpers gebildet wird, gebildet durch Karbonisieren eines porösen Körpers aus Plastik oder Papier zum Bilden eines Rahmens, wobei der poröse Körper mit Schlamm imprägniert ist, der Siliciumpulver und ein Harz enthält, das als Kohlenstoffquelle dient, wobei das Molverhältnis von Silicium zu Kohlenstoff 0,05 bis 4 beträgt und das Siliciumpulver eine durchschnittliche Partikelgröße von 30 µm oder weniger durch Kugelmahlen hat, wobei der poröse Körper nach dem Aufbringen des Schlamms so ausgepresst wird, dass miteinander verbundene Poren des porösen Körpers nicht mit dem Schlamm verstopft werden, und wobei das Material dieselbe Form hat wie der schwammige karbonisierte poröse Körper.

2. Wärmebeständiges, ultraleichtes poröses Strukturmaterial auf der Basis von Siliciumcarbid nach Anspruch 1, wobei das Harz wenigstens eines ist, das aus der Gruppe bestehend aus einem Phenolharz, einem Furanharz, einem organischen Metallpolymer und Sucrose ausgewählt ist.

3. Wärmebeständiges, ultraleichtes, poröses Strukturmaterial auf der Basis von Siliciumcarbid nach Anspruch 1, wobei der Schlamm ein Additiv enthält, das aus der Gruppe bestehend aus Kohlepulver, Grafitpulver und Ruß ausgewählt ist.

4. Wärmebeständiges, ultraleichtes poröses Strukturmaterial auf der Basis von Siliciumcarbid nach Anspruch 1, wobei der Schlamm ein Aggregat oder einen Oxidationsinhibitor enthält, der wenigstens ein Element ist, das ausgewählt ist aus der Gruppe bestehend aus Siliciumcarbid, Siliciumnitrid, Zirkondioxid, Zirkonium, Tonerde, Kieselerde, Mullit, Molybdänsilicid, Borcarbid und Borpulver.

5. Wärmebeständiges, ultraleichtes poröses Strukturmaterial auf der Basis von Siliciumcarbid nach Anspruch 1, wobei das in dem Schlamm enthaltene Siliciumpulver eine Siliciumlegierung umfasst, die wenigstens ein Element enthält, das ausgewählt ist aus der Gruppe bestehend aus Magnesium, Aluminium, Titan, Chrom, Mangan, Eisen, Kobalt, Nickel, Kupfer, Zink, Zirkonium, Niob, Molybdän und Wolfram, oder der Schlamm ein Gemisch aus dem Siliciumpulver und dem/den Metall(en) umfasst.

6. Wärmebeständiges, ultraleichtes poröses Strukturmaterial auf der Basis von Siliciumcarbid nach Anspruch 1, wobei das Silicium zur Schmelzinfiltration von einer Siliciumlegierung abgeleitet wird, die wenigstens ein Element enthält, das ausgewählt ist aus der Gruppe bestehend aus Magnesium, Aluminium, Titan, Chrom, Mangan, Eisen, Kobalt, Nickel, Kupfer, Zink, Zirkonium, Niob, Molybdän und Wolfram oder von einem Gemisch von Silicium und dem/den Metall(en) abgeleitet ist.

7. Verfahren zur Herstellung eines wärmebeständigen, ultraleichten porösen Strukturmaterials auf der Basis von Siliciumcarbid, wobei das Material eine Porosität von mehr als 90 % und eine Dichte von weniger als 0,3 g/cm³ hat, wobei das Material Siliciumcarbid mit einer hohen Benetzbarkeit für geschmolzenes Silicium enthält, wobei das Material ferner Silicium enthält, wobei das Verfahren Folgendes beinhaltet: Aufbringen eines Schlamms, der Siliciumpulver und ein Harz enthält, das als Kohlenstoffquelle dient, auf den Rahmen eines schwammigen porösen Körpers aus Plastik oder Papier mit einem Imprägnierungsverfahren, wobei das Molverhältnis zwischen Silicium und Kohlenstoff 0,05 bis 4 beträgt und das Siliciumpulver eine durchschnittliche Partikelgröße von 30 µm oder weniger durch Kugelmahlen aufweist, Auspressen des porösen Körpers nach dem Aufbringen des Schlamms, so dass die miteinander verbundenen Poren des porösen Körpers nicht mit dem Schlamm verstopft werden, Karbonisieren des resultierenden porösen Körpers bei einer Temperatur von 900°C bis 1320°C in Vakuum oder in einer inerten Atmosphäre, Unterziehen des resultierenden porösen Körpers einer reaktiven Sinterung bei einer Temperatur von 1320°C oder mehr in Vakuum oder in einer inerten Atmosphäre, so dass Siliciumcarbid mit einer hohen Benetzbarkeit für geschmolzenes Silicium erzeugt wird und offene Poren aufgrund einer Volumenreduzierungsreaktion in einem Schritt gebildet werden, und Infiltrieren von geschmolzenem Silicium in den resultierenden porösen Körper bei einer Temperatur von 1300°C bis 1800°C in Vakuum oder in einer inerten Atmosphäre, wobei das Material dieselbe Form hat wie der schwammige karbonisierte poröse Körper.

8. Verfahren zur Herstellung eines wärmebeständigen, ultraleichten porösen Strukturmaterials auf der Basis von Siliciumcarbid nach Anspruch 7, wobei das Harz wenigstens ein Element ist, das ausgewählt wurde aus der Gruppe bestehend aus einem Phenolharz, einem Furanharz, einem organischen Metallpolymer und Sucrose.

9. Verfahren zur Herstellung eines wärmebeständigen, ultraleichten porösen Strukturmaterials auf der Basis von Siliciumcarbid nach Anspruch 7, wobei der Schlamm ein Additiv enthält, das ausgewählt ist aus der Gruppe bestehend aus Kohlepulver, Grafitpulver und Ruß.

10. Verfahren zur Herstellung eines wärmebeständigen, ultraleichten porösen Strukturmaterials auf der Basis von Siliciumcarbid nach Anspruch 7, wobei der Schlamm ein Aggregat oder einen Oxidationsinhibitor enthält, der wenigstens ein Mitglied ist, das ausgewählt ist aus der Gruppe bestehend aus Siliciumcarbid, Siliciumnitrid, Zirkondioxid, Zirkonium, Tonerde, Kieselerde, Mullit, Molybdänsilicid, Borcarbid und Borpulver.

11. Verfahren zur Herstellung eines wärmebeständigen, ultraleichten porösen Strukturmaterials auf der Basis von Siliciumcarbid nach Anspruch 7, wobei das Siliciumpulver eine Siliciumlegierung umfasst, die wenigstens ein Element enthält, das ausgewählt ist aus der Gruppe bestehend aus Magnesium, Aluminium, Titan, Chrom, Mangan, Eisen, Kobalt, Nickel, Kupfer, Zink, Zirkonium, Niob, Molybdän und Wolfram, oder der Schlamm ein Gemisch aus dem Siliciumpulver und dem/den Metall(en) umfasst.

12. Verfahren zur Herstellung eines wärmebeständigen, ultraleichten, porösen Strukturmaterials auf der Basis von Siliciumcarbid nach Anspruch 7, wobei das Silicium zur Schmelzinfiltration von einer Siliciumlegierung abgeleitet ist, die wenigstens ein Element enthält, das ausgewählt ist aus der Gruppe bestehend aus Magnesium, Aluminium, Titan, Chrom, Mangan, Eisen, Kobalt, Nickel, Kupfer, Zink, Zirkonium, Niob, Molybdän und Wolfram, oder von einem Gemisch aus Silicium und dem/den Metall(en) abgeleitet ist.

## Revendications

1. Matériau structural poreux, ultra-léger, résistant à la chaleur, à base de carbure de silicium, le matériau ayant une porosité de plus de 90% et une densité de moins de 0,3 g/cm³, le matériau contenant du carbure de silicium ayant une haute mouillabilité au silicium fondu, le matériau contenant en outre du silicium fourni par l'infiltration de produit fondu dans un corps fritté poreux carbonisé ayant des pores ouverts formés par une réaction de réduction en volume, dans lequel le corps fritté poreux carbonisé est formé par le frittage réactif d'un corps poreux carbonisé spongieux formé en carbonisant un corps poreux fait en plastique ou en papier pour former une ossature, le corps poreux étant imprégné d'une boue contenant de la poudre de silicium et une résine fonctionnant comme une source de carbone, le rapport molaire de silicium à carbone étant de 0,05 à 4 et la poudre de silicium ayant une grosseur moyenne de particules de 30 µm ou moins par broyage à billes, le corps spongieux étant essoré après l'application de la boue de sorte que les pores interconnectés du corps spongieux ne sont pas bouchés par la boue et où le matériau a la même forme que le corps poreux carbonisé spongieux.

2. Matériau structural poreux, ultra-léger, résistant à la chaleur, à base de carbure de silicium selon la revendication 1, dans lequel la résine en est au moins une sélectionnée parmi le groupe consistant en résine phénolique, résine furanique, un polymère de métal organique et du saccharose.

3. Matériau structural poreux, ultra-léger, résistant à la chaleur, à base de carbure de silicium selon la revendication 1, dans lequel la boue contient un additif sélectionné parmi le groupe consistant en poudre de carbone, poudre de graphite et noir de carbone.

4. Matériau structural poreux, ultra-léger, résistant à la chaleur, à base de carbure de silicium selon la revendication 1, dans lequel la boue contient un agrégat ou un inhibiteur d'oxydation qui en est au moins un sélectionné parmi le groupe consistant en carbure de silicium, nitrure de silicium, zircone, zirconium, alumine, silice, mullite, siliciure de molybdène, carbure de bore et poudre de bore.

5. Matériau structural poreux, ultra-léger, résistant à la chaleur, à base de carbure de silicium selon la revendication 1, dans lequel la poudre de silicium contenue dans la boue comprend un alliage de silicium contenant au moins un métal sélectionné parmi le groupe consistant en magnésium, aluminium, titane, chrome, manganèse, fer, cobalt, nickel, cuivre, zinc, zirconium, niobium, molybdène et tungstène ou bien la boue comprend un mélange de poudre de silicium et du métal/des métaux.

6. Matériau structural poreux, ultra-léger, résistant à la chaleur, à base de carbure de silicium selon la revendication 1, dans lequel le silicium pour l'infiltration de produit fondu est dérivé d'un alliage de silicium contenant au moins un métal sélectionné parmi le groupe consistant en magnésium, aluminium, titane, chrome, manganèse, fer, cobalt, nickel, cuivre, zinc, zirconium, niobium, molybdène et tungstène ou bien est dérivé d'un mélange de silicium et du métal/des métaux.

7. Procédé de production d'un matériau structural poreux, ultra-léger, résistant à la chaleur, à base de carbure de silicium, le matériau ayant une porosité de plus de 90% et une densité de moins de 0,3 g/cm³, le matériau contenant du carbure de silicium ayant une haute mouillabilité au silicium fondu, le matériau contenant en outre du silicium, le procédé comprenant appliquer une boue contenant de la poudre de silicium et une résine fonctionnant comme une source de carbone à l'ossature d'un corps poreux spongieux fait en plastique ou en papier par un procédé d'imprégnation, le rapport molaire de silicium à carbone étant de 0,05 à 4 et la poudre de silicium ayant une grosseur moyenne de particules de 30 µm ou moins par broyage à billes, essorer le corps spongieux après l'application de la boue de sorte que les pores interconnectés du corps spongieux ne sont pas bouchés par la boue, carboniser le corps spongieux résultant à une température de 900°C à 1320°C sous vide ou sous une atmosphère inerte, soumettre le corps spongieux résultant à un frittage réactif à une température de 1320°C ou plus sous vide ou sous une atmosphère inerte, en vertu de quoi du carbure de silicium ayant une haute mouillabilité à du silicium fondu est produit et des pores ouverts sont formés en une étape par une réaction de réduction en volume et infiltrer du silicium fondu dans le corps spongieux résultant à une température de 1300°C à 1800°C sous vide ou sous une atmosphère inerte, où le matériau a la même forme que le corps poreux carbonisé spongieux.

8. Procédé de production d'un matériau structural poreux, ultra-léger, résistant à la chaleur, à base de carbure de silicium selon la revendication 7, dans lequel la résine en est au moins une sélectionnée parmi le groupe consistant en résine phénolique, résine furanique, un polymère de métal organique et du saccharose.

9. Procédé de production d'un matériau structural poreux, ultra-léger, résistant à la chaleur, à base de carbure de silicium selon la revendication 7, dans lequel la boue contient un additif sélectionné parmi le groupe consistant en poudre de carbone, poudre de graphite et noir de carbone.

10. Procédé de production d'un matériau structural poreux, ultra-léger, résistant à la chaleur, à base de carbure de silicium selon la revendication 7, dans lequel la boue contient un agrégat ou un inhibiteur d'oxydation qui en est au moins un sélectionné parmi le groupe consistant en carbure de silicium, nitrure de silicium, zircone, zirconium, alumine, silice, mullite, siliciure de molybdène, carbure de bore et poudre de bore.

11. Procédé de production d'un matériau structural poreux, ultra-léger, résistant à la chaleur, à base de carbure de silicium selon la revendication 7, dans lequel la poudre de silicium contenue dans la boue comprend un alliage de silicium contenant au moins un métal sélectionné parmi le groupe consistant en magnésium, aluminium, titane, chrome, manganèse, fer, cobalt, nickel, cuivre, zinc, zirconium, niobium, molybdène et tungstène ou bien la boue comprend un mélange de poudre de silicium et du métal/des métaux.

12. Procédé de production d'un matériau structural poreux, ultra-léger, résistant à la chaleur, à base de carbure de silicium selon la revendication 7, dans lequel le silicium pour l'infiltration de produit fondu est dérivé d'un alliage de silicium contenant au moins un métal sélectionné parmi le groupe consistant en magnésium, aluminium, titane, chrome, manganèse, fer, cobalt, nickel, cuivre, zinc, zirconium, niobium, molybdène et tungstène ou bien est dérivé d'un mélange de silicium et du métal/des métaux.
